# EUROPÄISCHE PATENTSCHRIFT

(11) **EP 4 287 913 B1**
(45) Veröffentlichungstag und Bekanntmachung des Hinweises auf die Patenterteilung: **27.03.2024**
(21) Anmeldenummer: 22730263.5
(22) Anmeldetag: 24.05.2022
(51) Int. Cl.: A47J 31/42, A47J 42/46

(54) **VORRICHTUNG UND VERFAHREN ZUM MAHLEN VON MAHLGUT**
DEVICE AND METHOD FOR GRINDING GROUND GOODS
DISPOSITIF ET PROCÉDÉ DE BROYAGE DU PRODUIT À BROYER

(30) Priorität: 01.06.2021 EP 21177220
(43) Veröffentlichungstag der Anmeldung: 13.12.2023
(73) Patentinhaber: JURA ELEKTROAPPARATE AG, 4626 Niederbuchsiten (CH)
(72) Erfinder: BÜTTIKER, Philipp, 4625 Oberbuchsiten (CH); REYHANLOO, Shahryar, 6405 Immensee (CH)
(74) Vertreter: Mertzlufft-Paufler, Cornelius
(86) Internationale Anmeldenummer: PCT/EP2022/064065
(87) Internationale Veröffentlichungsnummer: WO 2022/253639

(56) Entgegenhaltungen:
- WO-A1-2009/152761
- WO-A1-2010/095937
- WO-A1-2015/071242
- KR-B1- 101 932 088
- US-A1- 2004 200 912

## Beschreibung

Die Erfindung betrifft ein Verfahren zum Mahlen von Mahlgut mit zumindest einem Mahlwerk, wobei das Verfahren das Betätigen des Mahlwerks in eine erste Richtung zum Mahlen des Mahlguts und das Betätigen des Mahlwerks in eine von der ersten Richtung verschiedenen zweiten Richtung umfasst.

Es sind Mahlwerke bekannt, die zur Einstellung oder Variierung eines Mahlgrads, beispielsweise einer Kaffeepulverfeinheit, eine Verstellvorrichtung aufweisen. Insbesondere können über die Verstellvorrichtung Schneid- bzw. Mahlwerkzeuge eines Mahlwerks gegeneinander verstellt werden. Beispielsweise kann ein Mahlspalt bzw. die höhe eines Mahlspalts zwischen einem Mahlkegel und einem Mahlring verstellt werden. Diese Verstellung kann manuell oder automatisch erfolgen.

In WO 2015/071242 A1 ist eine Kaffeemühle beschrieben, die ein Mahlwerkzeug zum Mahlen von Kaffeebohnen, einen Motor zum Antreiben des Mahlwerkzeugs, einen Blockierungsdetektor zum Erfassen eines Blockierungszustands des Mahlwerkzeugs und/oder des Motors und eine Umkehreinheit umfasst, die so konfiguriert ist, dass sie eine Drehrichtung des Mahlwerkzeugs und/oder des Motors vorübergehend umkehrt, wenn der Blockierungsdetektor einen Blockierungszustand erfasst.

WO 2010/095937 A1 beschreibt eine Kaffeebohnen-Verpackungspatrone zur Aufnahme und Abgabe mehrerer Portionen von Kaffeebohnen kann mit einem Kaffeegetränkesystem verbunden werden. Die Kartusche umfasst einen Behälter mit einer Außenwand, die ein Innenvolumen und eine Öffnung an einem Ende desselben definiert. Ein dauerhaftes, vorzugsweise nicht abnehmbares Verschlusselement ist an dem einen Ende des Behälters angebracht und deckt die Öffnung im Wesentlichen ab. Eine Austrittsöffnung in dem Verschlussteil definiert einen Kaffeebohnenauslass, um Kaffeebohnen aus dem Innenvolumen zu transportieren. Das Verschlusselement verfügt ferner über relativ bewegliche Verschlussmittel zum selektiven Verschließen des Ausgangsdurchgangs, um den Kontakt des Kaffeebohneninhalts mit der Umgebungsluft zu verringern. Die Kartusche umfasst ferner Anschlussmittel zum Anschluss der Kartusche an ein Kaffeegetränkesystem. Es wird auch ein Kaffeegetränkesystem beschrieben, das die oben definierte Kaffeebohnen-Verpackungspatrone und mindestens eine Dosiervorrichtung und einen Mahlmechanismus umfasst. Die Dosiervorrichtung kann eine Dosierkammer zur Aufnahme einer Portion von Kaffeebohnen umfassen, die einer Menge entspricht, die für die Zubereitung einer einzelnen Portion eines Kaffeegetränks erforderlich ist. Die KR 101 932 088 B1 offenbart ein Verfahren zum Mahlen von Mahlgut mit zumindest eine Mahlwerk, das Verfahren umfassend: Betätigen des Mahlwerks in eine erste Richtung zum Mahlen des Mahlguts und Betätigen des Mahlwerks in eine von der ersten Richtung verschiedenen zweiten Richtung. J

Die US 2004/0200912 A1 beschreibt eine Vorrichtung zum Mahlen von Kaffeebohnen, die es ermöglicht, die Größe der gemahlenen Kaffeebohnen leicht zu kontrollieren, wird offenbart. Die Vorrichtung umfasst ein rotierendes Messer, das an seiner Oberseite Mahlklingen aufweist und von einem Motor gedreht wird, ein feststehendes Messer, das mit einem Abstand über dem rotierenden Messer angeordnet ist und an seiner Unterseite Mahlklingen und einen zentralen Einfüllstutzen aufweist, ein Schneckenrad, das mit dem feststehenden Messer verbunden ist, um das feststehende Messer anzuheben und abzusenken, ein Schneckenrad, das mit den Zähnen des Schneckenrades in Eingriff steht, um das Schneckenrad zu drehen, und einen Steuermotor, um das Schneckenrad in normaler und umgekehrter Richtung zu drehen.

Bei der Verstellung des Mahlgrads hin zu feineren Mahlgraden, d.h. beispielsweise bei einer Verkleinerung des Mahlspalts, besteht das Problem, dass sich in Anschluss an ein erstmaliges Mahlen von Mahlgut Reste dieses Mahlguts und/oder Reste des gemahlenen Mahlguts zwischen den Mahlwerkzeugen, insbesondere im Mahlspalt, befinden. Diese Reste können eine Verstellung hin zu feineren Mahlgraden erschweren oder verhindern und während einer Verstellung Beschädigung des Mahlwerks herbeiführen.

Eine Möglichkeit, diesem Problem zu begegnen, ist die Verstellung des Mahlgrads während des Mahlens von Mahlgut, beispielsweise kurz nach dem Beginn des Mahlvorgangs vorzunehmen. Allerdings kann das zu verteilende Mahlwerk eine hohe Mahlleistung bzw. Schöpfleistung aufweisen. Mit anderen Worten: Kurz nach Beginn des Mahlvorgangs kann bereits eine signifikante Menge Mahlgut gemahlen sein. Diese Herangehensweise hat also den Nachteil, dass eine Verstellung während des Mahlvorgangs sehr schnell nach Beginn des Mahlvorgangs erfolgen muss, beispielsweise innerhalb weniger Sekunden.

Der vorliegenden Erfindung liegt daher die Aufgabe zugrunde, ein Verfahren bereitzustellen, das die Verstellung eines Mahlwerks erleichtert, insbesondere ein Verfahren, das dem Nutzer des Mahlwerks ermöglicht, innerhalb eines größeren Zeitraums die Verstellung des Mahlwerks vorzunehmen.

Die Lösung diese Aufgabe besteht bei dem Verfahren der eingangs erwähnten Art insbesondere darin, dass das Betätigen des Mahlwerks in die zweite Richtung nach Abschluss des Mahlens des Mahlguts in Reaktion auf eine Nutzereingabe und/oder automatisch in Reaktion auf eine Anzahl Betätigungen des Mahlwerks in die erste Richtung erfolgt.

Die Betätigung des Mahlwerks in die erste Richtung kann beispielsweise eine erste (Rotations-)Bewegung eines ersten Mahlelements, z. B. eines Mahlkegels, relativ zu einem zweiten Mahlelement, z.B. ein Mahlring, zum Mahlen von Mahlgut in einem Mahlwerk sein. Die zweite Richtung kann beispielsweise eine der ersten Richtung entgegengesetzte (Rotations-)Bewegung sein. Die erste und/oder die zweite Richtung kann ebenso eine axiale Bewegung des ersten Mahlelements relativ zu dem zweiten Mahlelement sein. Das Betätigen des Mahlwerks in die zweite Richtung kann beispielsweise das Vergrößern eines Mahlspalts sein. Durch die Betätigung des Mahlwerks in die zweite Richtung kann ein in dem Mahlspalt befindliche Mahlgut, gemahlenes Mahlgut oder ein Mahlgut-Pulvergemisch aus dem Mahlspalt befördert werden. Mit anderen Worten: Durch die Betätigung des Mahlwerks in die zweite Richtung wird das Mahlwerk entspannt.

Durch die Entspannung des Mahlwerks nach Abschluss des Mahlgangs oder einer Anzahl Mahlgänge, d.h. des Mahlens des Mahlguts, kann der Mahlgrad verstellt, insbesondere verkleinert, werden, wobei Reste des Mahlguts vorab aus dem Mahlspalt, d.h. aus dem Scheidebereich zwischen dem ersten Mahlelement und dem zweiten Mahlelement entfernt werden. Dies ermöglich bzw. erleichtert zum einen die Verstellung des Mahlgrads. Zum anderen ist es dem Nutzer des Mahlwerks ermöglicht, die Verstellung des Mahlwerks zu einem beliebigen Zeitpunkt nach dem abgeschlossenen Mahlgang oder der Anzahl Mahlgänge und vor einem nächsten Mahlgang vorzunehmen. Dadurch wird der Zeitraum, in welchem eine Verstellung des Mahlwerks möglich ist, erheblich verlängert.

In einer Ausgestaltung ist vorgesehen, dass das Betätigen des Mahlwerks in die zweite Richtung, vorzugsweise automatisch, in Reaktion auf die Anzahl Betätigungen, insbesondere jede Betätigung, des Mahlwerks in die erste Richtung erfolgt.

Die Anzahl der Betätigungen kann vorbestimmt oder bestimmbar sein. Insbesondere kann die Anzahl der Betätigungen einstellbar sein, beispielsweise basierend auf der sich (durchschnittlich, geschätzt oder tatsächlich) während eines Mahlvorgangs im Mahlspalt ansammelnden Mahlguts und/oder gemahlenen Mahlguts. Hierdurch kann eine Entspannung des Mahlwerks mit einer Häufigkeit durchgeführt werden, die zur Verstellung des Mahlwerks zwischen jedem der Mahlgänge oder zwischen einer Anzahl von Mahlgängen ausreicht. Beispielsweise kann vorgesehen sein, dass nach jedem Mahlvorgang ein Entspannen des Mahlwerks erfolgt. Ebenso kann vorgesehen sein, dass das Betätigen des Mahlwerks in die zweite Richtung in Reaktion auf eine Mehrzahl an Betätigungen des Mahlwerks in die erste Richtung erfolgt. Derart kann eine Schonung des Mahlwerks und/oder des Mahlwerkantriebs erreicht werden.

Durch das regelmäßige Entspannen des Mahlwerks bzw. die Betätigung des Mahlwerks in die zweite Richtung in Reaktion auf eine Nutzereingabe und/oder in Reaktion auf eine Anzahl (z.B. jede) Betätigungen des Mahlwerks in die erste Richtung kann ein Mahlspalt zwischen den Mahlelementen des Mahlwerks regelmäßig gesäubert bzw. befreit werden, insbesondere von Fremdpartikeln wie Mahlgutreste. Hierdurch kann die Entstehung einer Aufbauschneide verhindert werden.

Ferner kann eine gleichmäßige Belastung des Mahlwerks, insbesondere des (Kunststoff-)Gehäuses des Mahlwerks, erreicht werden. Hierdurch kann eine Verformung des Mahlwerks oder des Mahlwerkgehäuses verhindert oder verringert werden. Ebenso kann ein Verschieben der Mahlelemente bzw. Mahlringe relativ zueinander verhindert oder verringert werden.

Folglich kann ein konstantes Mahlergebnis, insbesondere über die Lebensdauer des Mahlwerks, erreicht werde.

In einer Ausgestaltung ist vorgesehen, dass das Betätigen des Mahlwerks in die zweite Richtung in Reaktion auf die Nutzereingabe und/oder in Reaktion auf eine während des Mahlens detektierte Behinderung des Mahlens erfolgt, wobei die Nutzereingabe beispielsweise auf eine Reinigung und/oder eine Verstellung des Mahlwerks gerichtet ist.

Beispielsweise kann jeder Betätigung des Mahlwerks in die zweite Richtung die Nutzereingabe und/oder die detektierte Behinderung des Mahlens vorangehen. In einer anderen Ausgestaltung kann das Mahlwerk zusätzlich in die zweite Richtung betätigt werden in Reaktion auf die Nutzereingabe und/oder die detektierte Behinderung, d.h. zusätzlich zu einer Betätigung des Mahlwerks in die zweite Richtung, die automatisch nach Abschluss des Mahlens des Mahlguts oder nach einer oder mehrere Betätigungen des Mahlwerks in die zweite Richtung erfolgt. Mit anderen Worten: die Betätigung des Mahlwerks in die zweite Richtung kann zwischen zwei Mahlvorgängen mehrmals erfolgen.

Die Betätigung des Mahlwerks kann nur, oder auch, in Reaktion auf eine Nutzereingabe und/oder in Reaktion auf eine während des Mahlens detektierte Behinderung des Mahlens erfolgen, beispielsweise in Reaktion auf eine Nutzereingabe, die auf die Verstellung des Mahlwerks gerichtet ist. Hierdurch wird das Mahlwerk immer dann, und insbesondere nur dann, entspannt, bevor eine Mahlwerksverstellung erfolgt und/oder Mahlgut und/oder gemahlenen Mahlgut das Mahlen behindert. Hierdurch wird das Mahlwerk weiter geschont.

Darüber hinaus kann die Betätigung des Mahlwerks in die zweite Richtung in Reaktion auf eine Nutzereingabe eine Reinigung des Mahlwerks erleichtern. Die Betätigung des Mahlwerks in die zweite Richtung kann Mahlgut und/oder gemahlenes Mahlgut aus dem Mahlspalt befördern, beispielsweise in Richtung der Eingabestelle des Mahlguts. Derart kann die Entfernung des überschüssigen bzw. sich im Mahlspalt befindenden Mahlguts und/oder gemahlenen Mahlguts aus dem Mahlwerk, beispielsweise mittels einer Saugvorrichtung, erleichtert werden.

Die Betätigung des Mahlwerks in die zweite Richtung kann abhängig sein von der Art der Nutzereingabe. Beispielsweise kann das Betätigen des Mahlwerks in die zweite Richtung in Reaktion auf eine Nutzereingabe, die auf eine Verstellung des Mahlwerks gerichtet ist, für eine erste Zeitdauer erfolgen. Das Betätigen des Mahlwerks in die zweite Richtung in Reaktion auf eine Nutzereingabe, die auf eine Reinigung des Mahlwerks gerichtet ist, kann für eine zweite Zeitdauer erfolgen, wobei die zweite Zeitdauer länger als die erste Zeitdauer ist. Beispielsweise ist die erste Zeitdauer kürzer oder gleich zwei Sekunden und/oder die zweite Zeitdauer länger als zwei Sekunden und kürzer oder gleich zehn Sekunden. Ebenso kann das Betätigen des Mahlwerks in die zweite Richtung in Reaktion auf eine während des Mahlens detektierte Behinderung des Mahlens für die erste oder die zweite Zeitdauer erfolgen.

In einer Ausgestaltung ist vorgesehen, dass das Betätigen des Mahlwerks eine Bewegung, insbesondere ein Translations- und/oder Rotationsbewegung, eines ersten Mahlelements relativ zu einem zweiten Mahlelement umfasst. Das erste Mahlelement kann ein Mahlkegel, das zweite Mahlelement ein Mahlring, oder umgekehrt, sein. Die Bewegung des ersten Mahlelement relativ zum zweiten Mahlelement dient zum Mahlen des Mahlguts bzw. zur Entspannung des Mahlwerks, je nach Bewegungsrichtung. Die erste Richtung kann eine Rotationsrichtung des ersten Mahlelements relativ zum zweiten Mahlelement sein. Die zweite Richtung kann eine dieser Rotationsrichtung entgegengesetzten Rotationsrichtung sein, d.h. ein Rückwärtslaufen des Mahlwerks darstellen. Ebenso kann die erste Richtung eine Translationsbewegung des ersten Mahlelements hin zum zweiten Mahlelement sein. Die zweite Richtung kann eine dieser Translationsrichtung entgegengesetzten Translationsrichtung des ersten Mahlelements weg vom zweiten Mahlelement sein.

In einer Ausgestaltung ist vorgesehen, dass das Betätigen des Mahlwerks in die zweite Richtung ein Verstellen des Mahlwerks zur Einstellung eines, vorzugsweise im Vergleich zu einem bisher eingestellten ersten Mahlgrad gröberen zweiten, Mahlgrads umfasst. Die zweite Richtung die oben beschriebene Translationsrichtung darstellen. Mit anderen Worten: Die Translationsrichtung kann eine Richtung entlang einer Rotationsachse der oder eines der Mahlelemente sein, beispielsweise wobei eine Bewegung des oder eines der Mahlelemente in die Translationsrichtung in einer Veränderung, beispielsweise einer Vergrößerung eines Abstands zwischen den Mahlelementen, insbesondere des Mahlspalts, resultiert.

In einer Ausgestaltung ist vorgesehen, dass das erste Mahlelement ein Mahlrotor, insbesondere ein Mahlkegel, ist und das zweite Mahlelement ein Mahlstator, insbesondere ein Mahlring, ist.

In einer Ausgestaltung ist vorgesehen, dass das Verfahren ferner umfasst: Verstellen des Mahlwerks, insbesondere in Anschluss an das Betätigen des Mahlwerks in die zweite Richtung, zur Einstellung eines, vorzugsweise im Vergleich zum ersten und/oder zweiten Mahlgrad feineren dritten, Mahlgrads.

Beispielsweise umfasst das Verfahren das Mahlen von Mahlgut mit einem ersten, mittleren Mahlgrad. Nach Abschluss des Mahlgangs kann der Mahlgrad zu einem zweiten, groben Mahlgrad, geändert werden, der gröber als der mittlere Mahlgrad ist, um das Mahlwerk zu entspannen bzw. um im Mahlspalt verbliebendes Mahlgut zu entfernen. Anschließend kann ein dritter, feiner Mahlgrad, der feiner als der mittlere Mahlgrad ist, eingestellt werden, um gemahlenes Mahlgut mit dem feinen Mahlgrad herzustellen. Durch Betätigung des Mahlwerks in die zweite Richtung nach, insbesondere direkt nach, Abschluss des Mahlens des Mahlguts, ist es einem Nutzer des Mahlwerks ermöglicht, jederzeit vor einem nächsten Mahlgang den dritten Mahlgrad einzustellen.

In einer Ausgestaltung ist vorgesehen, dass das Verstellen des Mahlwerks ein Vergrößern und/oder Verkleinern eines Mahlspalts, insbesondere eines Mahlspalts zwischen dem ersten Mahlelement und dem zweiten Mahlelement, umfasst.

In einer Ausgestaltung ist vorgesehen, dass das Verstellen des Mahlwerks eine Translationsbewegung und/oder axiale Bewegung eines oder des ersten Mahlelements relativ zu einem oder dem zweiten Mahlelement umfasst.

In einer Ausgestaltung ist vorgesehen, dass das Verfahren ferner umfasst: Betätigen des Mahlwerks in die erste Richtung zum Mahlen des Mahlguts mit einem, insbesondere dem ersten und/oder dem dritten, Mahlgrad.

In einer Ausgestaltung ist vorgesehen, dass das Mahlgut Kaffeebohnen und/oder Kaffeepulver umfasst und/oder das Mahlwerk ein Mahlwerk für eine Kaffeemaschine ist.

In einer Ausgestaltung ist vorgesehen, dass das Mahlwerk bei einem Betrieb in der ersten Richtung zur Förderung von Mahlgut von einer Eingangsseite zu einer Ausgangsseite eingerichtet ist und/oder dass das Mahlwerk bei einem Betrieb in der zweiten Richtung zur Förderung von Mahlgut zurück zu einer Eingangsseite eingerichtet ist.

Die Eingangsseite kann dazu ausgestaltet sein, Mahlgut aufzunehmen bzw. Mahlgut zum Mahlwerk zu befördern. Beispielsweise grenzt die Eingangsseite an einen Behälter an, oder umfasst diesen, in den ein Nutzer Mahlgut platzieren kann, d.h. der Mahlgut aufnehmen kann. Die Ausgangsseite kann dazu ausgestaltet sein, gemahlenes Mahlgut aufzunehmen und/oder zu befördern, insbesondere zur Weiterverwendung, beispielsweise innerhalb eines Kaffeeautomaten. Der Mahlspalt kann eine Grenze bzw. einen Übergang zwischen der Eingangsseite und der Ausgangsseite darstellen.

Hierdurch wird zum einen bei einer Betätigung des Mahlwerks in der ersten Richtung Mahlgut in Richtung des Mahlspalts zum Mahlen des Mahlguts befördert. Dies erhöht die Effizienz des Mahlvorgangs. Zum anderen wird bei einem Betrieb des Mahlwerks in der zweiten Richtung Mahlgut oder gemahlenes Mahlgut aus dem Mahlspalt befördert. Dies dient zur Entspannung und schließlich zur Schonung des Mahlwerks und/oder zur erleichterten Reinigung des Mahlwerks.

In einer weiteren, möglicherweise eigenständigen Ausgestaltung ist eine Kaffeemaschine vorgesehen mit einem Mahlwerk und Mitteln zur Ausführung eines der oben beschriebenen Verfahren.

Nachstehend wird die Erfindung anhand mehrerer bevorzugter Ausführungsbeispiele näher beschrieben.

Es zeigt:
- Fig. 1: ein Flussdiagram eines ersten Verfahrens zum Mahlen von Mahlgut,
- Fig. 2: ein Flussdiagram eines zweiten Verfahrens zum Mahlen von Mahlgut,
- Fig. 3A: ein erstes Mahlelement eines Mahlwerks in einer 3-dimensionalen Ansicht,
- Fig. 3B: ein zweites Mahlelement eines Mahlwerks in einer 3-dimensionalen Ansicht,
- Fig. 4A: ein erstes Mahlwerk in einer 3-dimensionalen Ansicht,
- Fig. 4B: das erste Mahlwerk in einer Schnittdarstellung,
- Fig. 5: ein zweites Mahlwerk in einer Schnittdarstellung.

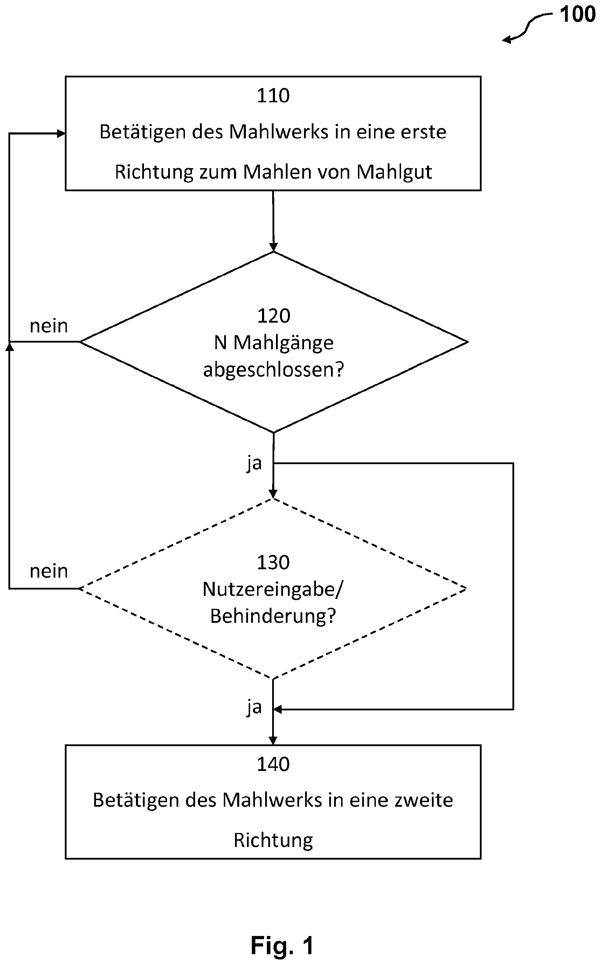

Figur 1 zeigt ein Flussdiagram eines ersten Verfahrens 100 zum Mahlen von Mahlgut mit zumindest einem Mahlwerk. Das Verfahren 100 umfasst einen ersten Schritt 110 zu Betätigung des Mahlwerks in eine erste Richtung. Beim Betätigen des Mahlwerks in die erste Richtung wird Mahlgut gemahlen. Beispielsweise wird innerhalb des Mahlwerks ein erstes Mahlelement relativ zu einem zweiten Mahlelement in eine erste Richtung betätigt. Die erste Richtung kann beispielsweise eine Rotationsrichtung oder eine Translationsrichtung des ersten Mahlelements relativ zu dem zweiten Mahlelement darstellen, die das Mahlen von Mahlgut ermöglicht.

Das Verfahren 100 kann in Schritt 120 das Bestimmen umfassen, ob das Mahlen von Mahlgut, d. h. der vorherige Mahlgang, abgeschlossen ist. In Schritt 120 kann ferner bestimmt werden, ob eine Anzahl N, insbesondere eine Mehrzahl, von Mahlgängen abgeschlossen ist, wobei N größer oder gleich 1 oder 2 ist. Mit anderen Worten: Schritt 120 kann das Bestimmen umfassen, ob das Mahlwerk in die erste Richtung zum Mahlen des Mahlguts N-fach betätigt wurde, insbesondere N-fach für eine vorbestimmte Zeitdauer betätigt wurde.

Wurden weniger als N Mahlgänge abgeschlossen bzw. das Mahlwerk weniger als N-fach in die erste Richtung zum Mahlen von Mahlgut betätigt, so kehrt das Verfahren zurück zu Schritt 110.

Wurde in Schritt 120 bestimmt, dass der Mahlgang bzw. die Anzahl N Mahlgänge abgeschlossen sind, so erfolgt in Schritt 140 das Betätigen des Mahlwerks in eine, von der ersten Richtung verschiedenen, zweite Richtung. Durch das Betätigen des Mahlwerks in die zweite Richtung wird das Mahlwerk entspannt. Die Betätigung des Mahlwerks in die zweite Richtung kann direkt in Anschluss an Schritt 110 oder Schritt 120 erfolgen, d. h. direkt nach Abschluss des einen oder der mehreren N Mahlgänge erfolgen. Die Bestimmung des Abschlusses von N Mahlgängen in Schritt 120 kann implizit in Schritt 110 erfolgen. Beispielsweise kann ein oder mehrere Mahlvorgänge als abgeschlossen gelten, wenn ein oder mehrere Betätigungen des Mahlwerks in die erste Richtung über einen (vor)bestimmten Zeitraum erfolgten, insbesondere jeweils erfolgten.

Ergänzend oder alternativ kann das Betätigen des Mahlwerks in die zweite Richtung in Reaktion, insbesondere nur in Reaktion, auf eine Nutzereingabe geschehen, die in Schritt 130 detektiert bzw. empfangen wird. Die Nutzereingabe ist beispielsweise auf eine Verstellung des Mahlwerks gerichtet. Beispielsweise wird das Mahlwerk nur dann oder immer dann in die zweite Richtung betätigt, wenn eine Nutzereingabe empfangen wird. Die Nutzereingabe kann beispielsweise nach Abschluss des einen oder der N Mahlgänge empfangen werden. Alternativ oder ergänzend kann die Nutzereingabe jederzeit, also unabhängig von einem Abschluss eines oder mehreren Mahlgängen oder dem Betätigen des Mahlwerks in die erste Richtung erfolgen. In einem weiteren Beispiel wird das Mahlwerk nur dann in die zweite Richtung betätigt, wenn eine Nutzereingabe empfangen wird, die auf die Verstellung des Mahlwerks gerichtet ist, insbesondere auf eine Verfeinerung des Mahlgrads, beispielsweise auf eine Verkleinerung des Mahlspalts. Wird keine Nutzereingabe empfangen, kehrt das Verfahren zurück zu Schritt 110.

Ergänzend oder alternativ kann das Betätigen des Mahlwerks in die zweite Richtung in Reaktion, insbesondere nur in Reaktion, auf eine Detektion einer Behinderung des Mahlwerks erfolgen. Beispielsweise kann Schritt 130 das Bestimmen umfassen, ob ein vorangegangener Mahlgang bestimmungsgemäß abgeschlossen wurde und/oder während eines der vorangegangenen Mahlgängen Unregelmäßigkeiten auftraten, insbesondere ob eine Behinderung des Mahlgangs bzw. der Mahlelemente auftrat, beispielsweise ein erhöhter Kraftaufwand während des Mahlgangs bestimmt wurde bzw. erhöhte Widerstände während des Mahlgangs bestimmt wurden. Wird eine solche Behinderung nicht bestimmt, kehrt das Verfahren zurück zu Schritt 110. Das Verfahren 100 kann keinen, einen oder beide der Verfahrensschritte 120 und 130 umfassen.

Ebenso kann der Betätigung des Mahlwerks in die zweite Richtung in Reaktion auf die Nutzereingabe/Behinderung die Bestimmung vorangehen, dass zwischen dem Betätigen oder der letzten Betätigung des Mahlwerks in die erste Richtung und der Nutzereingabe/Behinderung eine Betätigung des Mahlwerks in die zweite Richtung (noch) nicht erfolgte. Mit anderen Worten: Das Verfahren 100 umfasst die Betätigung des Mahlwerks in die zweite Richtung in Reaktion auf eine Nutzereingabe/Behinderung, falls nach Abschluss des vorangegangenen Mahlens von Mahlgut (noch) keine Betätigung des Mahlwerks in die zweite Richtung erfolgte.

Das Verfahren 100 kann zum Mahlen von Mahlgut mit mehreren Mahlwerken für jedes der mehreren Mahlwerke getrennt oder für alle der mehreren Mahlwerke gemeinsam, insbesondere gleichzeitig, durchgeführt werden.

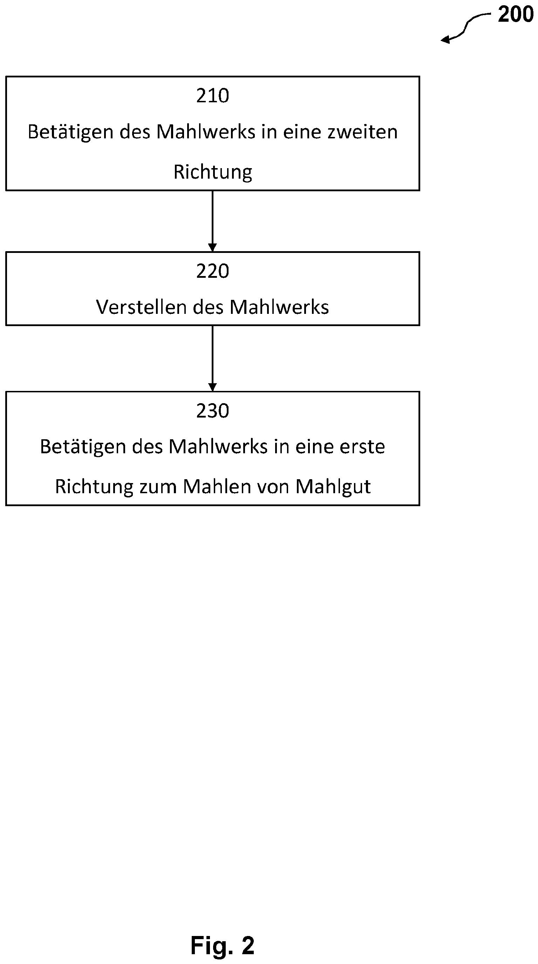

Figur 2 zeigt ein Flussdiagram eines zweiten Verfahrens 200 zum Mahlen von Mahlgut mit zumindest einem Mahlwerk. Das Verfahren 200 beginnt mit einem Verfahrensschritt 210, in dem das Mahlwerk in eine zweite Richtung betätigt wird. Der Verfahrensschritt 210 kann dem Verfahrensschritt 120 des Verfahrens 100 aus Figur 1 entsprechend. Die Zweite Richtung in Verfahren 200 kann die zweite Richtung aus dem Verfahren 100 sein. Mit anderen Worten: Die Verfahrensschritte 220 und 230 können an das Verfahren 100 anschließen.

In Anschluss an das Betätigen des Mahlwerks in die zweite Richtung, insbesondere zur Entspannung des Mahlwerks, erfolgt in Schritt 220 das Verstellen des Mahlwerks. Schritt 220 kann insbesondere das Verstellen des Mahlwerks hin zu einem feineren Mahlgrad umfassen. Beispielsweise umfasst Schritt 220 das Verkleinern eines Abstands zwischen zwei Mahlelementen des Mahlwerks, insbesondere das Verkleinern eines Mahlspalts bzw. einer Höhe eines Mahlspalts zwischen den zwei Mahlelementen.

In Anschluss an die Verstellung des Mahlwerks in Schritt 220 wird in Schritt 230 das Mahlwerk in eine erste Richtung zum Mahlen von Mahlgut betätigt. Die erste Richtung in Schritt 230 kann der ersten Richtung in Schritt 110 des Verfahrens 100 entsprechen. Mit anderen Worten: In Schritt 230 wird das Mahlwerk in die erste Richtung zum Mahlen von Mahlgut mit einem verstellten, beispielsweise feineren, Mahlgrad betätigt, insbesondere im Vergleich zu dem Mahlen von Mahlgut in Schritt 110 des Verfahrens 100 aus Figur 1.

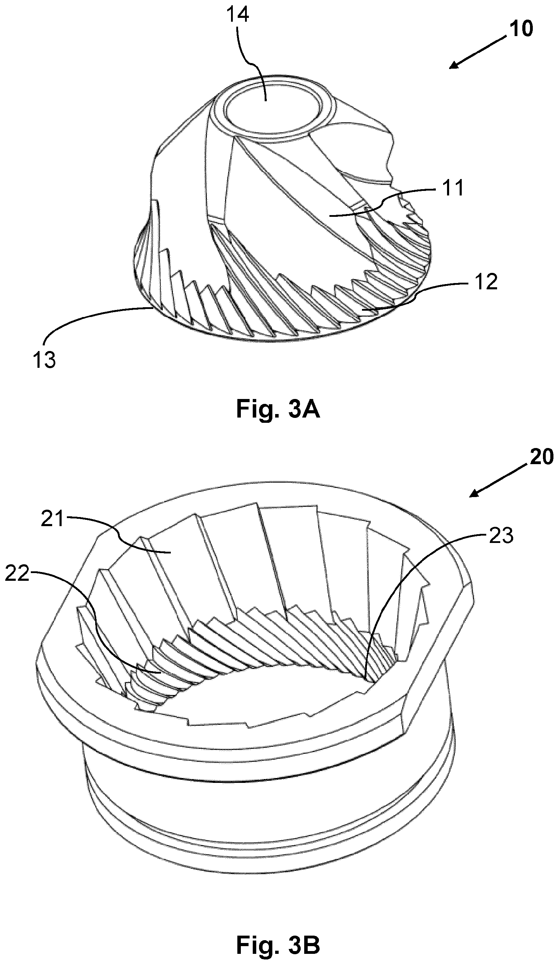

Figur 3A zeigt ein erstes Mahlelement 10 eines Mahlwerks in einer 3-dimensionalen Ansicht. Das erste Mahlelement 10 ist ein kreisförmiger Mahlkegel 10 bzw. Mahlkegelstumpf. Der Mahlkegel 10 umfasst entlang seines kreisförmigen Umfangs periodisch angeordnete erste Führungsmittel 11 und zweite Führungsmittel 12. Die ersten und zweiten Führungsmittel 11 und 12 sind dazu ausgestaltet, Mahlgut und/oder gemahlenes Mahlgut hin zu einer kreisförmigen Schneidkante 13 des Mahlkegels 10 zu fördern bzw. diese von der Schneidkante 13 weg zu bewegen. Die zweiten Führungsmittel 12 sind axial und radial zwischen den ersten Führungsmittel 11 und der Schneidkante 13 angeordnet. Die zweiten Führungsmittel 12 sind in höherer Periodizität als die ersten Führungsmittel 11 an einem Umfang des Mahlwerks 10 angeordnet. Der Mahlkegel 10 umfasst eine mittig angeordnete, d. h. die Mittelachse des Mahlkegels umfassende, Öffnung 14, die sich entlang der Mittelachse durch den Mahlkegel 10 erstreckt. Die Öffnung 14 ist eine Aufnahme für eine Drehachse bzw. ein Drehachsenelement und/oder eine Verstellvorrichtung.

Figur 3B zeigt ein zweites Mahlelement 20 eines Mahlwerks in einer 3-dimensionalen Ansicht. Das zweite Mahlelement 20 ist ein kreisförmiger Mahlring 20. Ähnlich zum oben beschriebenen Mahlkegel 10 umfasst der Mahlring 20 entlang seines kreisförmigen Umfangs periodisch angeordnete erste Führungsmittel 21 und zweite Führungsmittel 22. Die ersten und zweiten Führungsmittel 21 und 22 sind dazu ausgestaltet, Mahlgut und/oder gemahlenen Mahlgut hin zu einer kreisförmigen Schneidkante 23 des Malrings 20 zu fördern bzw. diese von der Schneidkante 23 weg zu bewegen. Die zweiten Führungsmittel 22 sind axial und radial zwischen den ersten Führungsmittel 21 und der Schneidkante 23 angeordnet. Die zweiten Führungsmittel 22 sind in höherer Periodizität als die ersten Führungsmittel 21 an einem Umfang des Mahlrings 20 angeordnet.

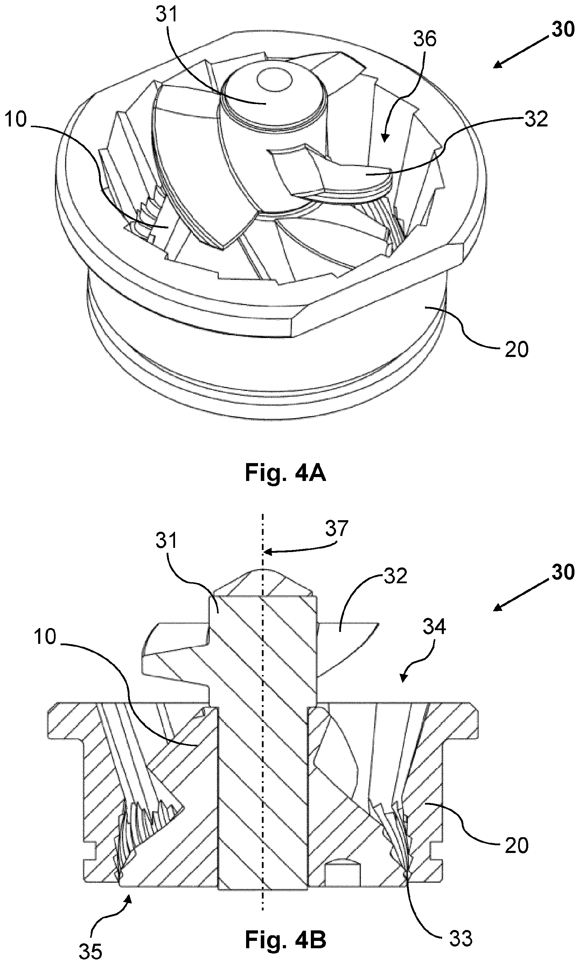

Die Figur 4A zeigt ein erstes Mahlwerk 30 umfassend das erste Mahlelement 10 und das zweite Mahlelement 20 in 3-dimensionaler Ansicht. Das Mahlwerk 30 umfasst ein Achsenelement 31. Das Achsenelement 31 ist in der Öffnung 14 des Mahlkegels 10 angeordnet. Der Mahlkegel 10 ist an dem Achsenelement 31 drehbar gelagert oder mit dem Achsenelement 31 verbunden. Der Mahlkegel 10 ist relativ zu dem Mahlring 20 und/ oder relativ zu dem Achsenelement 31 bewegbar, insbesondere rotierbar. Das Achsenelement 31 kann mit dem Mahlkegel 10 verbunden sein und ebenfalls relativ zu dem Mahlring 20 bewegbar, insbesondere rotierbar sein. Das Achsenelement 31 kann eine Drehachse und/oder eine Verstellvorrichtung sein.

Das Mahlwerk 30 umfasst dritte Führungsmittel 32 zur Förderung von Mahlgut hin zu einem Mahlspalt 33. Die dritten Führungsmittel 32 sind um eine Mittelachse des Achsenelements 31 periodisch an einem kreisförmigen Umfang des Achsenelements 31 angeordnet. Die dritten Führungsmittel 32 sind an dem Achsenelement 31 mit einer niedrigeren Periodizität angeordnet als die ersten und zweiten Führungsmittel an dem Mahlkegel 10 bzw. an dem Mahlring 20.

Figur 4B zeigt das erste Mahlwerk 30 in einer Schnittdarstellung. Gleiche o. ä. Merkmale sind mit gleichen Bezugszeichen versehen. Wie in Figur 4B verdeutlicht, umfasst das Mahlwerk 30 eine Eingangsseite 34 und eine Ausgangsseite 35. Die Eingangsseite 34 ist ausgestaltet, Mahlgut aufzunehmen, welches mittels der ersten, zweiten und/oder dritten Führungsmittel hin zum Mahlspalt 33 und in Richtung der Ausgangsseite 35 befördert werden kann. Nach dem Mahlen des Mahlguts durch die Schneidkanten 13 und 23 im Mahlspalt 33 gelangt das gemahlene Mahlgut auf die Ausgangsseite 35 des Mahlwerks 30.

Das Mahlwerk 30, insbesondere der Mahlkegel 10 und der Mahlring 20 sind nicht drehsymmetrisch bzw. nicht drehinvariant ausgestaltet. Eine Drehrichtung des Mahlkegels 10 relativ zum Mahlring 20, bzw. umgekehrt, ist daher bereits am Mahlkegel 10 und/oder am Mahlring 20 erkennbar. Das Mahlwerk 30 ist mittels der ersten, zweiten und/oder dritten Führungsmittel dazu ausgestaltet, bei einer ersten Rotationsrichtung des Mahlkegels 10 relativ zum Mahlring 20 Mahlgut innerhalb eines Mahlraums 36 von der Eingangsseite 34 zu der Ausgangsseite 35, bzw. von der Eingangsseite 34 zum Mahlspalts 33, zu befördern. Im gezeigten Beispiel ist die erste Rotationsrichtung eine Rechtsdrehung, d. h. eine Drehung im Uhrzeigersinn, des Mahlkegels 10 relativ zum Mahlring 20. Der Mahlraum 36 wird durch den Mahlkegel 10 und den Mahlring 20 eingeschlossen bzw. begrenzt.

Das Mahlwerk 30 ist ferner dazu ausgestaltet, bei einer zweiten Rotationsrichtung des Mahlkegels 10 relativ zum Mahlring 20 Mahlgut innerhalb des Mahlraums 36 von der Ausgangsseite 35 in Richtung der Eingangsseite 34, bzw. von dem Mahlspalt 33 in Richtung der Eingangsseite 35, zu befördern. Im gezeigten Beispiel ist die zweite Rotationsrichtung eine Linksdrehung, d. h. eine Drehung gegen den Uhrzeigersinn, des Mahlkegels 10 relativ zum Mahlring 20.

Das Achsenelement 31 kann ferner eine Verstellvorrichtung umfassen. Über die Verstellvorrichtung kann der Mahlkegel 10 und/oder der Mahlring 20, insbesondere ein relativer Abstand wischen dem Mahlkegel 10 und dem Mahlring 20, verstellt bzw. eingestellt werden. Beispielsweise kann der Mahlkegel 10 entlang einer Mittelachse 37 des Mahlwerks 30 relativ zum Mahlring 20 bewegt werden, insbesondere durch eine Bewegung des Achsenelements 31 entlang der Mittelachse 37 des Mahlwerks 30. Durch die axiale Verstellung des Mahlkegels 10 relativ zum Mahlring 20 entlang der Mittelachse 37 kann die Höhe bzw. die Größe des Mahlspalts 33 verändert bzw. eingestellt werden. Mit anderen Worten: Der relative Abstand der Schneidkannten 13 und 23 des Mahlkegels 10 bzw. des Mahlrings 20 kann durch eine axiale Anordnung des Mahlkegels 10 relativ zum Mahlring 20 entlang der Mittelachse 37 verstellt bzw. eingestellt werden.

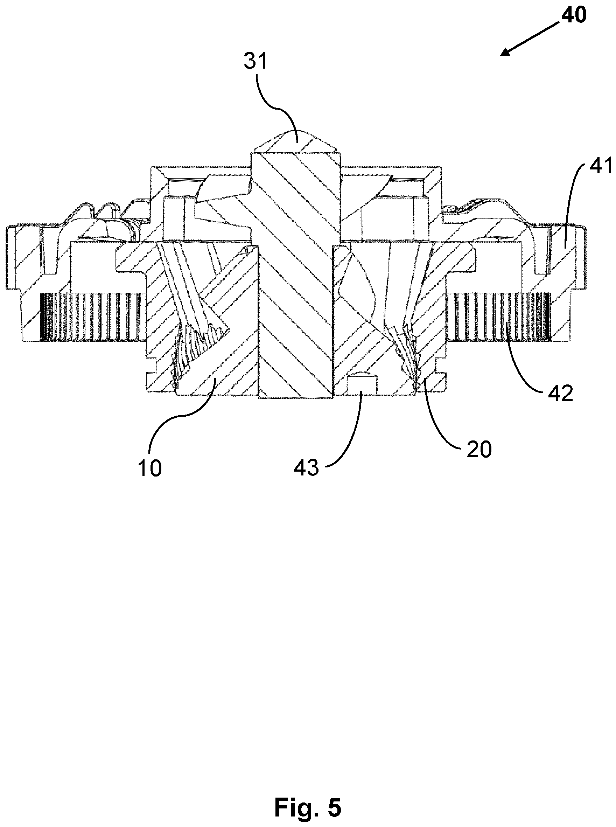

Die Figur 5 zeigt ein zweites Mahlwerk 40 in einer Schnittdarstellung. Das zweite Mahlwerk 40 umfasst, ähnlich zum ersten Mahlwerk 30, den Mahlkegel 10, den Mahlring 20 und das Achsenelement 31. Gleiche o. ä. Merkmale sind mit gleichen Bezugszeichen versehen.

Das Mahlwerk 40 umfasst ferner eine Antriebseinheit 41, die dazu ausgestaltet ist, den Mahlring 20 relativ zum Mahlkegel 10, bzw. umgekehrt, in eine bzw. die erste oder eine bzw. die zweite Richtung zu bewegen. Hierzu sind an der Antriebseinheit 41 Eingreifmittel 42 vorgesehen, die dazu ausgestaltet sind, eine Drehung des Mahlrings 20 relativ zum Mahlkegel 10 und relativ zum Achsenelement 31 anzutreiben, beispielsweise mittels korrespondierende Eingreifmittel (nicht dargestellt) am Mahlring 20. Um eine relative Drehung des Mahlring 20 zum Mahlkegel 10 zu gewährleisten, umfasst der Mahlkegel 10 ein Arretierungsmittel 43, im dargestellten Beispiel eine Aussparung 43 zur Aufnahme eines Arretierungsstifts (nicht dargestellt).

### Bezugszeichenliste

- 10: Erstes Mahlelement,
- 11: erstes Führungsmittel des ersten Mahlelements,
- 12: zweite Führungsmittel des ersten Mahlelements,
- 13: Schneidkante des ersten Mahlelements,
- 14: Öffnung im ersten Mahlelements,
- 20: zweites Mahlelement,
- 21: erstes Führungsmittel des zweiten Mahlelements,
- 22: zweite Führungsmittel des zweiten Mahlelements,
- 23: Schneidkante des zweiten Mahlelements,
- 30: erstes Mahlwerk,
- 31: Achsenelement des ersten Mahlwerks.
- 32: Führungsmittel des Achsenelements,
- 33: Mahlspalt des ersten Mahlwerks,
- 34: Eingangsseite des ersten Mahlwerks,
- 35: Ausgangsseite des ersten Mahlwerks,
- 36: Mahlraum des ersten Mahlwerks,
- 37: Mittelachse des ersten Mahlwerks,
- 40: zweites Mahlwerk,
- 41: Antriebseinheit des zweiten Mahlwerks,
- 42: Eingreifmittel der Antriebseinheit,
- 43: Arretierungsmittel des zweiten Mahlwerks,
- 100: erstes Verfahren zum Mahlen von Mahlgut,
- 110: erster Verfahrensschritt des ersten Verfahrens,
- 120: zweiter Verfahrensschritt des ersten Verfahrens,
- 130: dritter Verfahrensschritt des ersten Verfahrens,
- 140: vierter Verfahrensschritt des ersten Verfahrens,
- 200: zweites Verfahren zum Mahlen von Mahlgut,
- 210: erster Verfahrensschritt des zweiten Verfahrens,
- 220: zweiter Verfahrensschritt des zweiten Verfahrens,
- 230: dritter Verfahrensschritt des zweiten Verfahrens.

## Patentansprüche

1. Verfahren zum Mahlen von Mahlgut mit zumindest einem Mahlwerk (10), das Verfahren umfassend:
Betätigen (110) des Mahlwerks (30) in eine erste Richtung zum Mahlen des Mahlguts; und
Betätigen (140) des Mahlwerks (30) in eine von der ersten Richtung verschiedenen zweiten Richtung;
**dadurch gekennzeichnet, dass** das Betätigen des Mahlwerks (30) in die zweite Richtung nach Abschluss des Mahlens des Mahlguts in Reaktion auf eine Nutzereingabe (130) und/oder automatisch in Reaktion auf eine Anzahl Betätigungen (110) des Mahlwerks (30) in die erste Richtung erfolgt.

2. Verfahren nach Anspruch 1, **dadurch gekennzeichnet, dass** das Betätigen (140) des Mahlwerks (30) in die zweite Richtung, vorzugsweise automatisch, in Reaktion auf jede Betätigung (110) des Mahlwerks (30) in die erste Richtung erfolgt.

3. Verfahren nach Anspruch 1 oder 2, **dadurch gekennzeichnet, dass** das Betätigen (140) des Mahlwerks (30) in die zweite Richtung in Reaktion auf eine während des Mahlens detektierte Behinderung (130) des Mahlens erfolgt.

4. Verfahren nach Anspruch 3, **dadurch gekennzeichnet, dass** die Nutzereingabe (130) auf eine Reinigung und/oder eine Verstellung des Mahlwerks (30) gerichtet ist.

5. Verfahren nach einem der vorangegangenen Ansprüche,
**dadurch gekennzeichnet, dass** das Betätigen (110, 140) des Mahlwerks (30) eine Bewegung, insbesondere ein Translations- und/oder Rotationsbewegung, eines ersten Mahlelements (10) relativ zu einem zweiten Mahlelement (20) umfasst.

6. Verfahren nach einem der vorangegangenen Ansprüche, **dadurch gekennzeichnet, dass** das Betätigen (110) des Mahlwerks (30) in die erste Richtung eine Rotationsbewegung in die erste Richtung des ersten Mahlelements (10) relativ zu dem zweiten Mahlelement (20) umfasst, und wobei das Betätigen (140) des Mahlwerks (30) in die zweite Richtung eine Rotationsbewegung in die zweite, der ersten entgegengesetzten, Richtung des ersten Mahlelements (10) relativ zu dem zweiten Mahlelement (20) umfasst.

7. Verfahren nach einem der vorangegangenen Ansprüche, **dadurch gekennzeichnet, dass** das Betätigen (140) des Mahlwerks (30) in die zweite Richtung ein Verstellen des Mahlwerks (30) zur Einstellung eines, vorzugsweise im Vergleich zu einem bisher eingestellten ersten Mahlgrad gröberen zweiten, Mahlgrads umfasst.

8. Verfahren nach einem der Ansprüche 5-7, **dadurch gekennzeichnet, dass** das erste Mahlelement (10) ein Mahlrotor, insbesondere ein Mahlkegel, ist und wobei das zweite Mahlelement (20) ein Mahlstator, insbesondere ein Mahlring, ist.

9. Verfahren nach einem der vorangegangenen Ansprüche, **dadurch gekennzeichnet, dass** das Verfahren ferner umfasst:
Verstellen (220) des Mahlwerks, insbesondere in Anschluss an das Betätigen (140) des Mahlwerks in die zweite Richtung, zur Einstellung eines, vorzugsweise im Vergleich zum ersten und/oder zweiten Mahlgrad feineren dritten, Mahlgrads.

10. Verfahren nach einem der vorangehenden Ansprüche,
**dadurch gekennzeichnet, dass** das Verstellen (220) des Mahlwerks ein Vergrößern und/oder Verkleinern eines Mahlspalts (33), insbesondere eines Mahlspalts zwischen dem ersten Mahlelement (10) und dem zweiten Mahlelement (20), umfasst.

11. Verfahren nach einem der vorangehenden Ansprüche,
**dadurch gekennzeichnet, dass** das Verstellen (220) des Mahlwerks eine Translationsbewegung und/oder axiale Bewegung eines oder des ersten Mahlelements (10) relativ zu einem oder dem zweiten Mahlelement (20) umfasst.

12. Verfahren nach einem der vorangegangenen Ansprüche, **dadurch gekennzeichnet, dass** das Verfahren ferner umfasst:
Betätigen (230) des Mahlwerks (30) in die erste Richtung zum Mahlen des Mahlguts mit einem, insbesondere dem ersten und/oder dem dritten, Mahlgrad.

13. Verfahren nach einem der vorangegangenen Ansprüche, **dadurch gekennzeichnet, dass** das Mahlgut Kaffeebohnen und/oder Kaffeepulver umfasst und/oder das Mahlwerk (30) ein Mahlwerk für eine Kaffeemaschine ist.

14. Verfahren nach einem der vorangegangenen Ansprüche, **dadurch gekennzeichnet, dass** das Mahlwerk (30) bei einem Betrieb in der ersten Richtung zur Förderung von Mahlgut von einer Eingangsseite (34) zu einer Ausgangsseite (35) eingerichtet ist und/oder dass das Mahlwerk (30) bei einem Betrieb in der zweiten Richtung zur Förderung von Mahlgut zurück zu einer Eingangsseite (34) eingerichtet ist.

15. Kaffeemaschine mit zumindest einem Mahlwerk (30) und einer Vorrichtung zur Datenverarbeitung umfassend Mittel zur Ausführung des Verfahrens nach einem der vorangegangenen Ansprüche.

## Claims

1. Method for the grinding of grinding material by at least one grinder (10), the method comprising:
actuating (110) the grinder (30) in a first direction for grinding of the grinding material; and
actuating (140) the grinder (30) in a second direction different from the first direction;
**characterized in that** the grinder (30) is actuated in the second direction after completion of the grinding of the grinding material in response to a user input (130) and/or automatically in response to a number of actuations (110) of the grinder (30) in the first direction.

2. Method according to Claim 1, **characterized in that** the grinder (30) is actuated (140) in the second direction, preferably automatically, in response to each actuation (110) of the grinder (30) in the first direction.

3. Method according to Claim 1 or 2, **characterized in that** the grinder (30) is actuated (140) in the second direction in response to an obstruction (130) to grinding detected during grinding.

4. Method according to Claim 3, **characterized in that** the user input (130) is directed toward cleaning and/or adjusting the grinder (30).

5. Method according to one of the preceding claims, **characterized in that** the actuation (110, 140) of the grinder (30) comprises a movement, in particular a translational and/or rotational movement, of a first grinding element (10) relative to a second grinding element (20).

6. Method according to one of the preceding claims, **characterized in that** the actuation (110) of the grinder (30) in the first direction comprises a rotational movement in the first direction of the first grinding element (10) relative to the second grinding element (20), and wherein the actuation (140) of the grinder (30) in the second direction comprises a rotational movement in the second direction, counter to the first, of the first grinding element (10) relative to the second grinding element (20).

7. Method according to one of the preceding claims, **characterized in that** the actuation (140) of the grinder (30) in the second direction comprises an adjustment of the grinder (30) to set a second degree of grinding, which is preferably coarser than a previously set first degree of grinding.

8. Method according to one of Claims 5-7, **characterized in that** the first grinding element (10) is a grinding rotor, in particular a grinding cone, and wherein the second grinding element (20) is a grinding stator, in particular a grinding ring.

9. Method according to one of the preceding claims, **characterized in that** the method further comprises: adjusting (220) the grinder, in particular following the actuation (140) of the grinder in the second direction, to set a third degree of grinding, preferably finer than the first and/or second degree of grinding.

10. Method according to one of the preceding claims, **characterized in that** the adjustment (220) of the grinder comprises enlarging and/or reducing a grinding gap (33), in particular a grinding gap between the first grinding element (10) and the second grinding element (20).

11. Method according to one of the preceding claims, **characterized in that** the adjustment (220) of the grinder comprises a translational movement and/or axial movement of one or the first grinding element (10) relative to one or the second grinding element (20) .

12. Method according to one of the preceding claims, **characterized in that** the method further comprises: actuating (230) the grinder (30) in the first direction for grinding of the grinding material with a degree of grinding, in particular the first and/or the third degree of grinding.

13. Method according to one of the preceding claims, **characterized in that** the grinding material comprises coffee beans and/or coffee powder and/or the grinder (30) is a grinder for a coffee machine.

14. Method according to one of the preceding claims, **characterized in that** the grinder (30) is set up to convey grinding material from an input side (34) to an output side (35) with operation in the first direction, and/or **in that** the grinder (30) is set up to convey grinding material back to an input side (34) with operation in the second direction.

15. Coffee machine having at least one grinder (30) and a data processing device comprising means for carrying out the method according to one of the preceding claims.

## Revendications

1. Procédé de broyage de produit à broyer avec au moins un broyeur (10), ce procédé comprenant
l'actionnement (110) du broyeur (30) dans une première direction pour broyer le produit à broyer et
l'actionnement (140) du broyeur (30) dans une deuxième direction différente de la première direction,
**caractérisé en ce que** l'actionnement du broyeur (30) dans la deuxième direction a lieu après l'interruption du broyage du produit à broyer en réaction à une instruction de l'utilisateur (130) et/ou automatiquement en réaction à un nombre d'actionnements (110) du broyeur (30) dans la première direction.

2. Procédé selon la revendication 1, **caractérisé en ce que** l'actionnement (140) du broyeur (30) dans la deuxième direction a lieu, de préférence automatiquement, en réaction à chaque actionnement (110) du broyeur (30) dans la première direction.

3. Procédé selon la revendication 1 ou 2, **caractérisé en ce que** l'actionnement (140) du broyeur (30) dans la deuxième direction a lieu en réaction à une entrave (130) au broyage détectée lors du broyage.

4. Procédé selon la revendication 3, **caractérisé en ce que** l'instruction de l'utilisateur (130) vise à un nettoyage et/ou un réglage du broyeur (30).

5. Procédé selon une des revendications précédentes, **caractérisé en ce que** l'actionnement (110, 140) du broyeur (30) comprend un mouvement, en particulier un mouvement de translation et/ou de rotation, d'un premier élément de broyage (10) par rapport à un deuxième élément de broyage (20).

6. Procédé selon une des revendications précédentes, **caractérisé en ce que** l'actionnement (110) du broyeur (30) dans la première direction comprend un mouvement de rotation dans la première direction du premier élément de broyage (10) par rapport au deuxième élément de broyage (20) et que l'actionnement (140) du broyeur (30) dans la deuxième direction comprend un mouvement de rotation dans la deuxième direction, opposée à la première direction, du premier élément de broyage (10) par rapport au deuxième élément de broyage (20).

7. Procédé selon une des revendications précédentes, **caractérisé en ce que** l'actionnement (140) du broyeur (30) dans la deuxième direction comprend un réglage du broyeur (30) pour régler un deuxième degré de broyage, de préférence plus grossier par rapport à un premier degré de broyage réglé précédemment.

8. Procédé selon une des revendications 5 à 7, **caractérisé en ce que** le premier élément de broyage (10) est un rotor de broyage, en particulier un cône de broyage, et que le deuxième élément de broyage (20) est un stator de broyage, en particulier une bague de broyage.

9. Procédé selon une des revendications précédentes, **caractérisé en ce que** ce procédé comprend en outre
le réglage (220) du broyeur, en particulier à la suite de l'actionnement (140) du broyeur dans la deuxième direction, pour régler un troisième degré de broyage, de préférence plus fin par rapport au premier et/ou au deuxième degré de broyage.

10. Procédé selon une des revendications précédentes, **caractérisé en ce que** le réglage (220) du broyeur comprend un agrandissement et/ou une réduction d'un interstice de broyage (33), en particulier d'un interstice de broyage entre le premier élément de broyage (10) et le deuxième élément de broyage (20).

11. Procédé selon une des revendications précédentes, **caractérisé en ce que** le réglage (220) du broyeur comprend un mouvement de translation et/ou un mouvement axial d'un ou du premier élément de broyage (10) par rapport à un ou au deuxième élément de broyage (20).

12. Procédé selon une des revendications précédentes, **caractérisé en ce que** ce procédé comprend en outre
l'actionnement (230) du broyeur (30) dans la première direction pour broyer le produit à broyer avec un, en particulier le premier et/ou le troisième degré de broyage.

13. Procédé selon une des revendications précédentes, **caractérisé en ce que** le produit à broyer comprend des grains de café et/ou de la poudre de café et/ou que le broyeur (30) est un broyeur pour une machine à café.

14. Procédé selon une des revendications précédentes, **caractérisé en ce que** le broyeur (30) est équipé pour déplacer le produit à broyer d'un côté d'entrée (34) à un côté de sortie (35) lors d'un fonctionnement dans la première direction et/ou que le broyeur (30) est équipé pour ramener le produit à broyer vers le côté d'entrée (34) lors d'un fonctionnement dans la deuxième direction.

15. Machine à café avec au moins un broyeur (30) et un dispositif pour le traitement de données comprenant des moyens pour la mise en oeuvre du procédé selon une des revendications précédentes.
